# EUROPÄISCHE PATENTSCHRIFT

(11) **EP 0 498 050 B1**
(45) Veröffentlichungstag und Bekanntmachung des Hinweises auf die Patenterteilung: **08.03.1995**
(21) Anmeldenummer: 91119603.8
(22) Anmeldetag: 16.11.1991
(51) Int. Cl.: B01F 17/18, C11D 1/62

(54) **Fettsäureester des N-Methyl-N,N,N,-trihydroxyethyl-ammonium-methylsulfat enthaltende wässrige Emulsionen**
Aqueous emulsions comprising fatty acid esters of N-methyl-N,N,N-trihydroxyethyl-ammonium-methyl-sulfate
Emulsions aqueuses contenantes des esters d'acides gras avec de N-methyl-N,N,N-trihydroxyethyl-ammonium

(30) Priorität: 17.01.1991 DE 4101251
(43) Veröffentlichungstag der Anmeldung: 12.08.1992
(73) Patentinhaber: HÜLS AKTIENGESELLSCHAFT, 45764 Marl (DE)
(72) Erfinder: Lüders, Harald, Dr., W-6100 Darmstadt-Eberstadt (DE); Kosswig, Kurt, Dr., W-4370 Marl (DE); Steinhardt, Hauke, W-4690 Herne 1 (DE)

(56) Entgegenhaltungen:
- EP-A- 0 040 562
- EP-A- 0 284 036
- EP-A- 0 295 385
- EP-A- 0 295 386
- EP-A- 0 330 261
- WO-A-91/01295
- DD-A- 230 711
- US-A- 3 915 867
- SEIFEN- ÖLE- FETTE- WACHSE, Band 115, Nr. 1, 19. Januar 1989, Seiten 3-8;AUGSBURG, DE; L. GODEFROY et al.: "Neue kationische Tenside für konzentrierteTextilweichmacher"

## Beschreibung

Die Erfindung betrifft wäßrige Emulsionen, die Fettsäureester des N-Methyl-N,N,N-trihydroxyethyl-ammonium-methylsulfats enthalten.

Fettsäureester des N-Methyl-N,N,N-trihydroxyethyl-ammonium-methylsulfats sind kationische Tenside. Die Herstellung dieser Ester kann nach verschiedenen literaturbekannten Verfahren erfolgen.

US-A-3 915 876 beschreibt ein Syntheseverfahren für N-Methyl-N,N-di-(β -C₁₄-C₁₈-acyloxyethyl)-N-β-hydroxyethyl-ammonium-methylsulfat ausgehend von Triethanolamin und Fettsäuremethylestern im Molverhältnis 1 : 2 durch Umesterung in Gegenwart von Natriummethylat als Katalysator unter milden Bedingungen und die anschließende Quaternisierung mit Dimethylsulfat. Es werden besonders hellfarbige Produkte erhalten.

DE-A-37 10 064 beinhaltet die Umsetzung von Glycerintristearat mit Triethanolamin. Bei dieser Umesterung fällt ein Produktgemisch aus etwa 50 % Triethanolaminstearaten und 50 % Glycerinstearaten sowie freiem Glycerin an. Nach seiner Quaternisierung mit Methylchlorid liegt eine Mischung aus kationischem Tensid und den erwähnten Nebenbestandteilen vor, die nicht abgetrennt werden.

DE-A-37 20 332 beansprucht ein Verfahren zur Herstellung von Fettsäureestern des N-Methyl-N,N,N-trihydroxyethyl-ammonium-methylsulfats durch direkte Veresterung von Triethanolamin mit Fettsäure in Gegenwart katalytischer Mengen Fettsäuremethylester und anschließender Quaternisierung mit Dimethylsulfat.

Die kationischen Tenside werden allgemein zur besseren Handhabbarkeit mit bis zu 25 % Isopropanol oder anderen niederen Alkoholen oder Diolen verdünnt.

Die nach den erwähnten Herstellverfahren produzierbaren Produkte sind als Textilweichmacher mit guten ökotoxikologischen Eigenschaften anwendungstechnisch besonders interessant. In diesem Anwendungsbereich gelangen Emulsionen bestehend aus kationischen Tensiden, Dispergierhilfsmitteln, Parfüm und Farbstoff sowie gegebenenfalls weiteren Komponenten in Wasser.

Das kationische Tensid liegt in Form feinstverteilter Tröpfchen vor, die nicht koaleszieren dürfen, was zu einer Auftrennung des Produktes in mehrere Phasen führen würde. Bei der Formulierung eines Wäscheweichspülers ist es somit von großer Bedeutung, die Emulsion zu stabilisieren. Der heutige Trend zu sogenannten Weichspülerkonzentraten mit 15 - 25 % Wirkstoffgehalt stellt den Formulierer vor erhebliche Viskositätsprobleme.

Trotz des hohen Gehaltes an kationischem Tensid muß die Emulsion möglichst dünnflüssig eingestellt werden, weil dadurch neben besserer Gießfähigkeit auch eine gleichmäßigere Verteilung des Wirkstoffes in der Spülflotte, verbunden mit gesteigertem weichmachenden Effekt, erreicht wird. Zur Viskositätsverminderung werden verschiedene Dispergatoren zugesetzt.

US-A-3 915 867 beschreibt, daß N-Methyl-N,N-di-(β-C₁₄-C₁₈-acyloxyethyl)-N-β-hydroxyethyl-ammonium-methylsulfat selbst-emulgierende Textilweichmacher sind und keine Emulgiermittel benötigt werden, wie z. B. nichtionische Tenside. Es werden die weichmachenden Eigenschaften einer 8%igen, d. h. verdünnten Emulsion beschrieben, ohne Viskositätsangaben. Der Wirkstoff wurde auf Basis Fettsäuremethylester hergestellt.

EP-A-0 040 562 offenbart 20%ige Weichspülerkonzentrate mit N-Methyl-N,N-di-(β-C₁₄-C₁₈-acyloxyethyl)-N-β-hydroxyethyl-ammonium-methylsulfat als kationischen Wirkstoff. Als Dispergator kommen 10 bis 67 % bezogen auf kationisches Tensid nichtionische Tenside, z. B. Fettalkoholoxethylate zur Anwendung. Die Produkte weisen Viskositäten von 100 - 900 mPa·s auf und müssen vor ihrer Anwendung durch Verdünnen mit Wasser auf Viskositäten von 40 - 80 mPa·s eingestellt werden.

L. Godefroy und H. Hein, Seifen-Öle-Fette-Wachse 115, 3 (1989) setzen Dialkylammoniumester auf Basis teilhydrierten Talgs als textilweichmachende Komponente ein und erwirken durch Zusatz von 2,8 bis 3,6 % bezogen auf kationisches Tensid N-Methyl-N,N,N-trihydroxyethylammonium-methylsulfat als "agent fluidifiant" zur Verflüssigung konzentrierter (16,7 - 27,8%iger) Emulsionen auf 30 - 60 mPa·s. Ohne diesen Verflüssiger hat eine 5,56%ige Emulsion bereits eine Viskosität von 60 - 80 mPa·s bei 20 °C.

DE-A-37 20 331 beseitigt den Nachteil hoher Viskositäten durch Kombination des Di-fettsäureesters des N-Methyl-N,N,N-trihydroxyethylammonium-methylsulfats mit 10 bis 90 % einer zweiten kationischen Komponente, z. B. Di-Talgfettsäurealkyl-imidazolinium-methylsulfat, Distearyldimethylammoniumchlorid, N-Methyl-N-triethoxy-N,N-bis-[2-(Talgfettamido)-ethyl]-ammonium-methylsulfat, und optimal mit einem Dispergiermittel, z. B. einer Mischung von Oleylaminoxethylaten und Ölsäure. Die Zubereitungen solcher Formulierungen erfordern zusätzlichen Lager- und Mischaufwand.

Diese für Textilweichmacher notwendigen Dispergatoren stellen anwendungstechnisch einen erheblichen Nachteil dar.

Aufgabe der vorliegenden Erfindung war es daher, niedrigviskose, selbstemulgierende, stabile, konzentrierte, auf Basis stickstoffhaltiger Fettsäureester enthaltende wäßrige Emulsionen herzustellen.

Niedrigviskos bedeutet in diesem Zusammenhang eine Viskosität unterhalb 100 mPa·s bei 25 °C, gemessen mit Brookfield-Viskosimeter mit Spindel Nr. 2 bei 30 U/min. Stabil in diesem Zusammenhang bedeutet, daß die Emulsion mindestens 15 % des im Titel erwähnten Wirkstoffs enthält.

Die Aufgabe wurde dadurch gelöst, daß Fettsäureester des N-Methyl-N,N,N-trihydroxyethyl-ammonium-methylsulfats als kationische Wirkstoffe eingesetzt werden, die im Mittel pro Stickstoffatom 1,1 bis 1,7 langkettige C₁₄-C₁₈-Acylreste aufweisen.

Gegenstand der Erfindung ist daher eine lagerstabile, wäßrige Emulsion des Fettsäureesters des N-Methyl-N,N,N-trihydroxyethyl-ammonium-methylsulfats mit Wirkstoffgehalten über 15 %, welche dadurch gekennzeichnet ist, daß die quartäre Ammoniumverbindung im Mittel 1,1 bis 1,7 Fettsäurereste aufweist und die Emulsion keinen zusätzlichen Emulgator enthält und Viskositäten unter 100 mPa·s bei 25 °C aufweist.

Es wurde überraschend gefunden, daß Emulsionen dieser Wirkstoffe ohne jeglichen Einsatz eines Emulgators niedrigviskos und stabil sind, auch dann, wenn das Erscheinungsbild der wäßrigen Emulsionen durch Zusatz von Parfüm und Farbstoff veredelt wird.

Als kationische Wirkstoffe finden Produkte Anwendung, die durch Estersynthese aus Triethanolamin und C₁₄-C₁₈-Fettsäure im Molverhältnis 1 : 1,1 bis 1 : 1,7 und anschließende Quaternisierung hergestellt werden. In Beispiel 1 ist die Synthese eines Talgfettsäureesters des N-Methyl-N,N,N-trihydroxyethyl-ammonium-methylsulfats mit durchschnittlich 1,4 Estergruppen pro Molekül beschrieben, die nach Abwandlung der Stoffmengen auch für die Herstellung der übrigen erwähnten Ester Gültigkeit hat. Zweckmäßigerweise kann der Wirkstoff mit bis zu 30 % Isopropanol zu einer besser handhabbaren Handelsform verdünnt werden.

Besonders bevorzugt sind kationische Wirkstoffe mit C₁₆-C₁₈-Fettsäureresten, ganz besonders bevorzugt Produkte, die auf Basis Stearinsäure, Talgfettsäure oder teilgeharteten Talgfettsäuren hergestellt werden.

Weiterhin besonders bevorzugt sind kationische Wirkstoffe mit 1,4 bis 1,6 Fettsäureresten pro Stickstoffatom.

Der Wirkstoff kann mittels üblicher mechanischer Einarbeitungsmethoden in mit Calciumchlorid gehärtetes Wasser eingearbeitet werden. Bevorzugt wird zur Herstellung der Emulsion ein wirksames Rührwerk, z. B. Ultra-Turrax-Rührer, eingesetzt.

Bevorzugt werden Emulsionen mit mindestens 15%iger Wirkstoffkonzentration, besonders bevorzugt werden 15 - 25%ige Wirkstoffkonzentrationen eingestellt. In dem Wasser wird eine Calciumchlorid-Konzentration von 0,1 bis 2 %, bevorzugt 0,3 bis 1 %, eingestellt. Der Emulsion kann zur Veredelung Parfüm und Farbstoff zugefügt werden.

Der Herstellvorgang ist in den Beispielen 2 ff. beschrieben. Er ist auf ähnliche Präparationen abzuwandeln. Vergleichsbeispiel 5 und 6 zeigen, daß kationische Wirkstoffe des Alkylammoniumester-Typs mit mehr als 1,7 Estergruppen pro Stickstoffatom als 20%ige Emulsion schon nach 1 Tag Lagerdauer koaleszieren, während die mit 1,1 bis 1,7 Estergruppen pro Stickstoffatom sowohl bei 20 °C als auch bei 40 °C nach 21 Tagen Lagerdauer noch stabil sind und niedrige Viskositäten aufweisen. Die bei 20 °C gelagerten Produkte zeigen Viskositäten von 15 bis 35 mPa·s bei 25 °C Meßtemperatur. Auch bei 40 °C Lagertemperatur bleiben die Viskositäten im Bereich zwischen 25 und 75 mPa·s sehr niedrig.

Insbesondere Emulsionen auf Basis Fettsäureester des N-Methyl-N,N,N-trihydroxyethyl-ammonium-methylsulfats mit 1,4 bis 1,6 Talgfettsäureresten sind als Wäscheweichspülmittel geeignet.

Vorteile der erfindungsgemäßen Emulsionen sind:
- -: Emulsionen der Titelverbindung können ohne Emulgatorenzusatz hergestellt werden.
- -: Die Emulsionen weisen sehr niedrige Viskositäten und sehr gute Stabilitäten auf.
- -: Ein Zusatz anderer Kationentenside ist nicht notwendig.
- -: Die Emulsionen sind als Wäscheweichspüler einsetzbar (Beispiel 7).

### Beispiel 1

Herstellung von Fettsäureester des N-Methyl-N,N,N-trihydroxyethyl-ammonium-methylsulfats mit im Mittel 1,4 Talgfettsäureresten pro Molekül.

In einer 2 l-Rührapparatur mit Tropftrichter, Destillationsaufsatz und Stickstoffbegasung werden 756 g Talgfettsäure und 6,3 g Talgfettsäuremethylester vorgelegt und 15 min. lang gerührt. Sodann werden 298 g Triethanolamin hinzugefügt und das Reaktionsgemisch unter Durchperlen von Stickstoff solange auf 195 °C erhitzt, bis die Säurezahl unter 5 mg KOH/g gefallen ist (ca. 3 Std.). Während der Reaktion wird das Reaktionswasser abdestilliert. Der Ansatz wird auf 90 °C abgekühlt, mit Isopropanol auf 85 % verdünnt, auf 60 °C abgekühlt und gegebenenfalls mit 2,5 % 30%igem Wasserstoffperoxid gebleicht. Vor dem Abfüllen wird mit Dräger-Röhrchen auf Dimethylsulfat in der Gasphase geprüft. Der Wert soll unterhalb 0,005 ppm liegen.

### Beispiel 2

Herstellung eines Fettsäureesters des N-Methyl-N,N,N-trihydroxyethylammonium-methylsulfats mit 1,1 Talgfettsäureresten enthaltenden Emulsion.

In einer Produktvorlage mit Produktumwälzung, die durch eine Homogenisierkammer mit Ultra-Turrax-Homogenisator führt, werden 250 g Trinkwasser (12 °dH), 2,5 g Calciumchloridlösung 25%ig und 5 g Parfüm vorgelegt und bei Raumtemperatur emulgiert. Bei weiter laufendem Homogenisator wird eine auf 50 °C erwärmte Schmelze von 132,1 g kationischem Tensid 85%ig in Isopropanol (112,3 g Wirkstoff) innerhalb ca 1 min. hinzugefügt. Gleichzeitig wird mit einer Mischung aus 98 g Wasser und 7,5 g Calciumchloridlösung 25%ig verdünnt.

In die dünnflüssige Emulsion werden schließlich noch 5 g Farbstoff (Luconylblau) eingemischt. Man erhält 500 g Emulsion mit 20 % kationischem Wirkstoffgehalt mit einer Viskosität von 30 mPa·s (25 °C).

Nach 21 tägiger Lagerung bei 20 °C beträgt die Viskosität 35 mPa·s und bei 40 °C 75 mPa·s.

### Beispiel 3

Es wird eine Emulsion analog Beispiel 2 hergestellt mit dem Unterschied, daß ein kationischer Wirkstoff mit im Mittel 1,4 Talgfettsäureresten pro Molekül eingesetzt wird. Man erhält eine Emulsion der Viskosität 15 mPa·s (25 °C). Nach 21tägiger Lagerung bei 20 °C beträgt die Viskosität 15 mPa·s und bei 40 °C 25 mPa·s.

### Beispiel 4

Es wird eine Emulsion analog Beispiel 2 hergestellt mit dem Unterschied, daß ein kationischer Wirkstoff mit im Mittel 1,6 Talgfettsäureresten pro Molekül eingesetzt wird. Man erhält eine Emulsion der Viskosität 30 mPa·s (25 °C). Nach 21tägiger Lagerung bei 20 °C beträgt die Viskosität 35 mPa·s und bei 40 °C 35 mPa·s.

### Beispiel 5

Es wird eine Emulsion analog Beispiel 2 hergestellt mit dem Unterschied, daß ein kationischer Wirkstoff mit im Mittel 1,8 Talgfettsäureresten pro Molekül eingesetzt wird. Man erhält eine Emulsion, die schon nach einem Tag koalesziert.

### Beispiel 6

Es wird eine Emulsion analog Beispiel 2 hergestellt mit dem Unterschied, daß ein kationischer Wirkstoff mit im Mittel 2,0 Talgfettsäureresten pro Molekül eingesetzt wird. Man erhält eine Emulsion, die schon nach einem Tag koalesziert.

### Beispiel 7

Jeweils zwei weiße Baumwoll-Frotteehandtücher werden zusammen mit 4 kg Baumwoll-Ballastgewebe bei 95 °C zusammen in einer Haushaltswaschmaschine mit einem phosphatfreien Vollwaschmittel gewaschen und anschließend mit 27 g einer Emulsion nach Beispiel 3 weichgespült. Nach dem Trocknen wurde der Weichgriff sensorisch im Vergleich zu nicht weichgespülten und mit einem Markenprodukt weichgespülten Handtüchern als gut bewertet.

## Patentansprüche

1. Lagerstabile, wäßrige Emulsion des Fettsäureesters des N-Methyl-N,N,N-trihydroxyethyl-ammonium-methylsulfats mit Wirkstoffgehalten über 15 %,
dadurch gekennzeichnet,
daß die quartäre Ammoniumverbindung im Mittel 1,1 bis 1,7 Fettsäurereste aufweist und die Emulsion keinen zusätzlichen Emulgator enthält und Viskositäten unter 100 mPa·s bei 25 °C aufweist.

2. Emulsionen nach Anspruch 1,
dadurch gekennzeichnet,
daß die Wirkstoffgehalte bei 15 - 25 % liegen.

3. Emulsionen nach Anspruch 1 und 2,
dadurch gekennzeichnet,
daß die Viskositäten unter 50 mPa·s liegen.

4. Emulsionen nach den Ansprüchen 1 bis 3,
dadurch gekennzeichnet,
daß teilgehärtete und/oder gehärtete Talgfett- und/oder Stearinsäureester als Fettsäureester verwendet werden.

5. Emulsionen nach den Ansprüchen 1 bis 4,
dadurch gekennzeichnet,
daß die Emulsion Parfüm und/oder Farbstoff zur Veredelung enthält.

6. Emulsionen nach den Ansprüchen 1 bis 5,
dadurch gekennzeichnet,
daß die Emulsion 0,1 - 2 % Calciumchlorid, bezogen auf ihren Wassergehalt, enthält.

7. Emulsionen nach den Ansprüchen 1 bis 6,
dadurch gekennzeichnet,
daß die Emulsion 0,3 - 1 % Calciumchlorid, bezogen auf ihren Wassergehalt, enthält.

8. Emulsionen nach den Ansprüchen 1 bis 7,
dadurch gekennzeichnet,
daß in die Emulsion durch Direktveresterung aus Fettsäuren, Triethanolamin und katalytischen Mengen Fettsäuremethylester und anschließende Quaternisierung gewonnene kationische Tenside eingesetzt werden.

9. Verwendung der Emulsionen nach den Ansprüchen 1 bis 8 als Wäscheweichspülmittel.

## Claims

1. A storage-stable aqueous emulsion of the fatty-acid ester of N-methyl-N,N,N-trihydroxyethylammonium methyl sulphate having a content of active substance of more than 15%, characterized in that the quaternary ammonium compound contains on average from 1.1 to 1.7 fatty-acid residues and the emulsion contains no additional emulsifier and has a viscosity of below 100 mPa·s at 25°C.

2. An emulsion according to claim 1, characterized in that the content of active substance is from 15 to 25%.

3. An emulsion according to either of claims 1 and 2, characterized in that the viscosity is below 50 mPa·s.

4. An emulsion according to any of claims 1 to 3, characterized in that fully and/or partially hydrogenated tallow fatty-acid esters and/or stearic esters are used as fatty-acid ester.

5. An emulsion according to any of claims 1 to 4, characterized in that for its enhancement the emulsion contains scent and/or dye.

6. An emulsion according to any of claims 1 to 5, characterized in that the emulsion contains from 0.1 to 2% of calcium chloride, based on its water content.

7. An emulsion according to any of claims 1 to 6, characterized in that the emulsion contains from 0.3 to 1% of calcium chloride, based on its water content.

8. An emulsion according to any of claims 1 to 7, characterized in that cationic surfactants are employed in the emulsion which are obtained by direct esterification from fatty acids, triethanolamine and catalytic amounts of fatty-acid methyl ester followed by quaternization.

9. The use of an emulsion according to any of Claims 1 to 8 as fabric conditioner.

## Revendications

1. Emulsion aqueuse, stable au stockage, de l'ester d'acide gras du sulfate du N-méthyl-N,N,N-trihydroxyéthyl-ammonium, présentant des teneurs en substance active supérieures à 15 %,
caractérisée en ce que le composé d'ammonium quaternaire présente en moyenne de 1,1 à 1,7 radicaux acide gras et que l'émulsion ne renferme pas d'émulsifiant complémentaire et qu'elle présente des viscosités inférieures à 100 mPa.s à 25°C.

2. Emulsions selon la revendication 1,
caractérisées en ce que les teneurs en substance active se situent à 15 - 25 %.

3. Emulsions selon les revendications 1 et 2,
caractérisées en ce que les viscosités se situent au-dessous de 50 mPa.s.

4. Emulsions selon les revendications 1 à 3,
caractérisées en ce que l'on utilise, comme esters d'acide gras, des esters gras du suif partiellement et/ou totalement durcis et/ou des esters de l'acide stéarique.

5. Emulsions selon les revendications 1 à 4,
caractérisées en ce que pour son ennoblissement, l'émulsion renferme du parfum et/ou du colorant.

6. Emulsions selon les revendications 1 à 5,
caractérisées en ce que l'émulsion renferme de 0,1 à 2 % de chlorure de calcium, relativement à sa teneur en eau.

7. Emulsions selon les revendications 1 à 6,
caractérisées en ce que l'émulsion renferme de 0,3 à 1 % de chlorure de calcium, relativement à sa teneur en eau.

8. Emulsions selon les revendications 1 à 7,
caractérisées en ce que l'on utilise dans l'émulsion des surfactifs cationiques obtenus par estérification directe à partir d' acides gras, de triéthanolamine et de quantités catalytiques d'esters méthyliques d'acide gras et par quaternisation subséquente.

9. L'utilisation des émulsions selon les revendications 1 à 8, en tant qu'agents de rinçage pour l'assouplissement du linge.
